# EUROPEAN PATENT APPLICATION

(11) **EP 3 916 363 A1**
(43) Date of publication of application: **01.12.2021**
(21) Application number: 20176407.3
(22) Date of filing: 26.05.2020
(51) Int. Cl.: G01F 1/34, E03F 5/22, E03F 7/00, F04B 23/02, F04D 15/00

(54) **METHOD FOR DETERMINING A PUMPED FLOW FROM A PUMP AND A FLOWMETER**

(71) Applicant: Xylem Europe GmbH, 8200 Schaffhausen (CH)
(72) Inventor: WESSMAN, Martin, 169 40 SOLNA (SE)
(74) Representative: Brann AB

(57) **Abstract**

The invention relates to a method for determining a pumped flow (Q) from a pump by means of a flowmeter (5) that comprises an internal pressure sensor (25) configured to measure the static liquid pressure (H-in) at the inner surface (21) of the flowmeter (5), and an external pressure sensor (26) configured to measure the static liquid pressure (H-out) at the outer surface (22) of the flowmeter (5). The method comprises the steps of measuring the static liquid pressure (H-in) at the inner surface (21), measuring the static liquid pressure (H-out) at the outer surface (22), determining the Static head (H-stat) of the pump based on the measured static liquid pressure (H-in), the measured static liquid pressure (H-out) and a pressure difference (H-diff) corresponding to the difference in height position between the internal pressure sensor (25) and the external pressure sensor (26), wherein (H-stat) = (H-in) - (H-out) - (H-diff), and determining the pumped Flow (Q) by using the determined Static head (H-stat) of the pump from a predetermined pump specific Q-(H-stat)-relationship. The present invention also relates to a flowmeter (5) and a pump assembly.

## Description

### Technical field of the Invention

The present invention belongs to the technical field of pumps and methods for determining a pumped flow of liquid from such a pump. The present invention belongs specifically to the technical field of flowmeters for determining the pumped flow of liquid from a pump, especially pumps configured for pumping liquid comprising solid matter, such as wastewater. It shall be pointed out that also the output or pumped flow from other types of pumps than wastewater pumps are the target of the present invention. The flowmeter of the present invention determines the pumped flow of liquid by monitoring the liquid pressure.

The flowmeter comprises a main body having a tubular basic shape, the main body in the radial direction having an inner surface and an outer surface, wherein said inner surface defines an axially extending central opening of the main body and wherein said central opening is configured to be arranged in fluid communication with an outlet opening of the pump.

### Background of the Invention

A pump station typically has a reservoir for holding a liquid, such as a well, a sump, a holding tank or a tank. In some pump stations, there may be multiple wells/sumps that are separated from or connected to each other. One or more pumps can be used to transport liquid into or out of the reservoir. For example, pumps may be used to transport sewage out of sumps in sewage pump stations, or to pump fresh water into holding tanks in clean water boost stations.

A typical liquid reservoir for wastewater has an inlet to admit liquid to enter the tank and an outlet through which the liquid is removed/discharged from the tank. Each liquid reservoir has one or more pumps associated with the outlet. The pumps, when activated and in operation, transport the liquid, as required based on appropriate control signals.

In many pump stations there is a need or wish to know the pumped flow from the pump, e.g. in order to monitor the throughput of the pump station, in order to monitor the active duty of the pumps, in order to evaluate the efficiency of the pump or pump station, etc.

Flowmeters are usually connected to the outlet pipe of a pump station in a dry installation and the flowmeters needs to be verified/calibrated at regular interval which is cumbersome and has great negative impact on the operation of the pump station if they needs to be removed in order to be verified/calibrated and/or replaced/serviced. Flowmeters are expensive and not all pump stations have a flowmeter from the beginning, and it is cumbersome to retrofit a flowmeter to a pump station since all known flowmeters needs to be arranged having straight sections of outlet pipes on both sides of the flowmeter in order to obtain useful/applicable measurements. Thereto the outlet pipe sections need to have separate support structures in order to relieve the flowmeter from unnecessary stress/strain.

Known flowmeters are for instance thermodynamic flowmeters which are extremely complicated and requires expensive and complicated auxiliary equipment such as coolers, etc. Another known flowmeter is hydraulic flowmeters measuring the velocity of the pumped flow either by means of electromagnets or velocity sensors and thereafter determines the pumped flow using the cross section area of the outlet pipe. However, the flow profile in an outlet pipe is never homogenous/uniform even though the outlet pipes before and after the flowmeter are straight.

### Object of the Invention

The present invention aims at obviating the aforementioned disadvantages and failings of previously known flowmeters and methods for determining the pumped flow of liquid from a pump.

A primary object of the present invention is to provide an improved method for determining the pumped flow of liquid from a pump and an improved flowmeter, which is easier to install and replace and which is cheaper than known flowmeters.

### Summary of the Invention

According to the invention at least the primary object is attained by means of the initially defined flowmeter and method for determining the pumped flow of liquid from a pump having the features defined in the independent claims. Preferred embodiments of the present invention are further defined in the dependent claims.

According to the present invention, there is provided a method for determining a pumped flow (Q) of liquid from a pump by means of a flowmeter, wherein the method comprises the steps of:
- measuring the static liquid pressure (H-in) at the inner surface of the main body of the flowmeter using an internal pressure sensor of the flowmeter,
- measuring the static liquid pressure (H-out) at the outer surface of the main body of the flowmeter using an external pressure sensor of the flowmeter,
- determining the Static head (H-stat) of the pump based on:
   - the measured static liquid pressure (H-in) at the inner surface,
   - the measured static liquid pressure (H-out) at the outer surface, and
   - a pressure difference (H-diff) corresponding to the difference in height position between the internal pressure sensor and the external pressure sensor,
   wherein (H-stat) = (H-in) - (H-out) - (H-diff), and
- determining the pumped Flow (Q) by using the determined Static head (H-stat) of the pump from a predetermined pump specific Q-(H-stat)-relationship.

According to the present invention, there is provided a pump assembly comprising a pump, a flowmeter and a control unit.

Thus, the present invention is based on the insight of measuring/monitoring the liquid pressure at the outlet of the pump and the liquid pressure at the inlet of the pump together with available data concerning the predetermined pump specific Q-(H-stat)-relationship. Thus, each pump type has a predetermined general Q-(H-stat)-relationship and each pump individual that is sold has an individual Q-(H-stat)-relationship located within an acceptable tolerance range around the general Q-(H-stat)-relationship. Thus, by determining the static head (H-stat) of the pump, the pumped flow (Q) of liquid is easily determined. Thereto, the inventive flowmeter is configured to be connected to the outlet of the pump and thereby easy to install and replace.

According to various embodiments of the present invention the predetermined pump specific Q-(H-stat)-relationship is determined by operating the pump for at least three pump calibration runs having different Static head (H-stat) and measuring the corresponding amounts of pumped Flow (Q) in order to obtain a set of pump specific Q-(H-stat)-pairs, and adjusting a predetermined general Q-(H-stat)-relationship using said at least three pump specific Q-(H-stat)-pairs. Thereby the accuracy of the inventive method and flowmeter is further improved.

According to various embodiments of the present invention the flowmeter comprises X internal pressure sensors, wherein the method comprises the steps of:
- for each internal pressure sensor measuring the static liquid pressure (H-in) at the inner surface of the main body of the flowmeter,
- measuring the static liquid pressure (H-out) at the outer surface of the main body of the flowmeter using the external pressure sensor,
- determining the Static head (H-stat) of the pump based on:
   - a sum of the measured static liquid pressures (H-in) at the inner surface,
   - the measured static liquid pressure (H-out) at the outer surface, and
   - a sum of pressure differences (H-diff) corresponding to the difference in height position between the respective internal pressure sensor and the external pressure sensor,
   wherein (H-stat) = [sum(H-in) - X^{∗}(H-out) - sum(H-diff) ] / X, and
- determining the pumped Flow (Q) by using the determined Static head (H-stat) of the pump from a predetermined pump specific Q-(H-stat)-relationship.

By using several internal pressure sensor the accuracy of the inventive method and flowmeter is further improved since the flow profile at the outlet of the pump is not homogenous/uniform.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic view of an example embodiment of a pump station according to the present invention,
- Fig. 2: is a schematic perspective view of an inventive flowmeter,
- Fig. 3: is a schematic cross-sectional view of the flowmeter according to figure 2, and
- Fig. 4: is a schematic example diagram of a Q-Hstat-relationship for a pump in a pump station according to figure 1.

### Detailed description of preferred embodiments of the invention

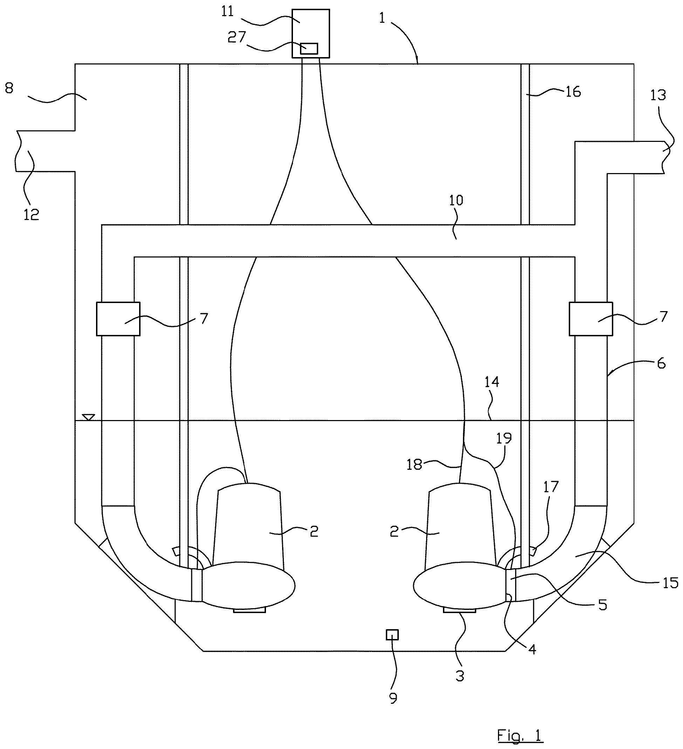

The invention is applicable to a pump station and concern monitoring and control of a pump station. Reference is initially made to figure 1 illustrating a pump station 1, e.g. a wastewater pump station. However other liquids may be pumped and in other types of environment, and the invention is not limited to wastewater or such pump stations even thought the present invention will be described in connection with a wastewater pump station.

The pump station 1 comprises at least one pump 2 having an inlet 3 and an outlet 4, a flowmeter 5 connected to the outlet opening 4 of the pump 2, an outlet pipe 6 connected to the flowmeter 5 and extending from the flowmeter 5 and a non-return valve 7 arranged downstream the pump 2. The pump station 1 comprises a tank 8, also known as reservoir, sump, etc. configured for temporary storage of liquid. The pump 2 is configured for transporting the liquid away from the tank 8 via the outlet conduit 5. The pump 2 is located in the tank 8, and the pump 2 is located in partly or fully submerged position.

The disclosed pump station 1 also comprises a level sensor 9 located in the tank 8 and preferably in a position always submerged when the pump station 1 is in operation. Thus, the level sensor 9 is preferably located below the inlet 3 of the pump 2. According to various alternative embodiments the level sensor is constituted by a dry installed level sensor, e.g. using ultrasound, radar, etc., hanging above the liquid level and/or located outside the tank 8. Also other types of level sensors are conceivable. The level sensor is used to determine when to activate and deactivate the pump 2.

Usually this type of pump stations 1 comprises at least two pumps, wherein the second pump is used to prevent flooding and/or as a backup if the first pump malfunctions and/or the two pumps alternate. The second pump having an inlet and an outlet, an outlet pipe 10 extending from the pump outlet and is connected to the outlet pipe 5 of the first pump 2. The outlet pipe 10 of the second pump preferably also comprises a non-return valve 7 arranged downstream the second pump. The non-return valves are arranged to prevent the pumped flow from one of the pumps to return to the tank 8 via the other pump, and also to prevent the liquid in the outgoing piping from returning to the tank 8 when the pumps are deactivated.

A local control unit 11 is operatively connected to the pumps 2 and different sensors in the pump station 1, and may further be operatively connected to a remote/external control unit (not shown). According to various alternative embodiments the local control unit may be partly or fully located inside the pump 2. The pump station 1 comprises an inlet 12 for incoming/influent liquid and an outlet 13 for discharged/effluent liquid, the outlet 13 is part of the outlet pipe 5 and/or the outlet pipe 10. External outlet piping is connected to the outlet 13 and the external outlet piping guides the pumped liquid for example to another pump station and/or a wastewater plant. Everything described in connection with said at least one pump 2 is applicable also for the other pumps in the pump station 1. During operation of the pump station 1 the liquid level 14 in the tank 8 will rise and fall depending on the influent liquid and the operation of the pumps 2.

The part of the outlet pipe 6 located closest the pump 2 is constituted by a discharge connection 15. During installation of the pump 2, the pump 2 is guided downwards along a guide bar arrangement 16, usually two parallel cylindrical bars, extending from the top of the pump station 1 to the discharge connection 15. The pump arrangement comprises a connection element 17, also known as claw, running along the guide bar arrangement 16 during lowering and hoisting of the pump 2. When the pump 2 reaches the discharge connection 15 the connection element 17 engage a seat at the upper part of discharge connection 15 and the outlet 4 of the pump 2 is aligned with the inlet of the discharge connection 15. The weight of the pump 2 and the pivot point at the engagement between the engagement connection 17 and the discharge connection 15 secures a sealing effect between the pump arrangement and the discharge connection 15.

The flowmeter 5 is connected to the pump outlet 4 before the pump arrangement is guided into the tank 8. Thus, the flowmeter 5 is easy to install and replace, and the other elements of the pump station 1 need not to be adapted or adjusted when a flowmeter 5 is retrofitted to a pump 2. An electric cable 18 is connected to the pump 2 and provides power to the pump 2 from an external part of the local control unit 11, the electric cable 18 may also comprise communication/data wires. A second electric cable 19 is connected to the flowmeter 5 and provides power to the flowmeter 5 from the external part of the local control unit 11. The second electric cable 19 may also comprise communication/data wires. In one embodiment the second electric cable 19 is connected to the pump 2. According to various embodiments a part of the local control unit 11 is located in the pump 2 and/or in the flowmeter 5.

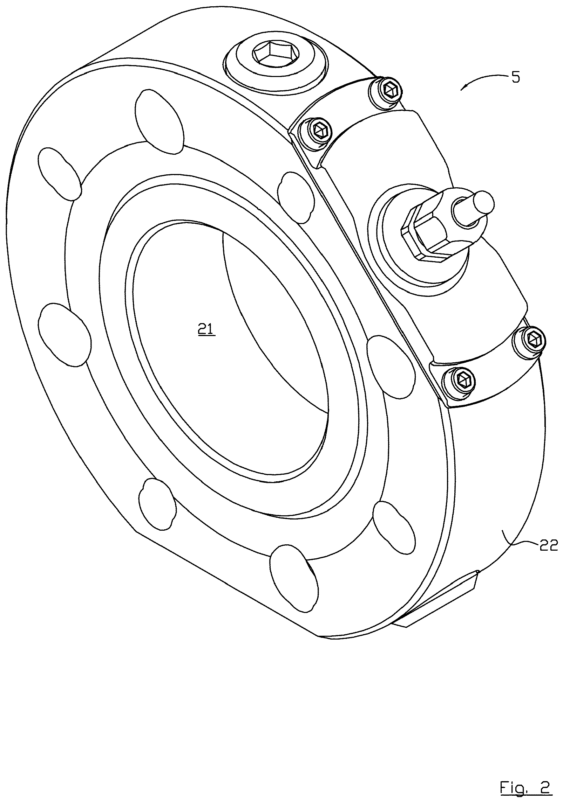

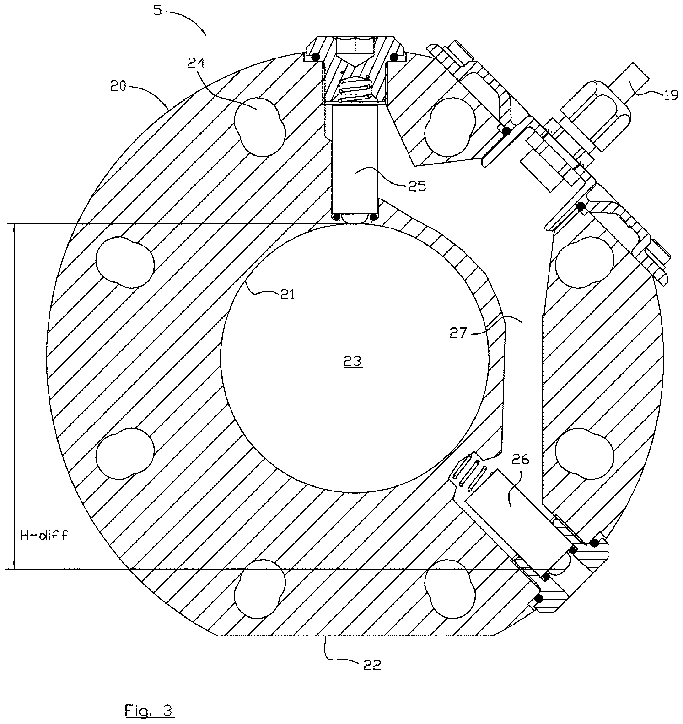

Reference is now also made to figures 2 and 3 disclosing an example of an inventive flowmeter 5.

The flowmeter 5 comprises a main body 20 having a tubular basic shape, the main body 20 in the radial direction having an inner surface 21 and an outer surface 22. Said inner surface 21 defines an axially extending central opening 23 of the main body 20 and said central opening 23 is configured to be arranged in fluid communication with the outlet opening 4 of the pump 2. The diameter of the central opening 23 is preferably equal to the diameter of the pump outlet 4, and according to various embodiments the diameter of the central opening 23 is bigger than the diameter of the pump outlet 4. The main body 20 comprises a set of through holes 24 in order to be connected to the pump 2. The thickness of the main body 20 is preferably less than half the outer diameter of the main body 20, preferably less than the inner diameter of the main body 20, preferably less than half the inner diameter of the main body 20.

The flowmeter 5 also comprises at least one internal pressure sensor 25 configured to measure the static liquid pressure (H-in) at the inner surface 21 of the main body 20, and an external pressure sensor 26 configured to measure the static liquid pressure (H-out) at the outer surface 22 of the main body 20. The second electric cable 19 is connected to the sensors via internal cavities 27, or drillings, in the main body 20. The internal cavity 27 may also comprise a part of the local control unit 11. The internal pressure sensor 25 and the external pressure sensor 26 are configured to be operatively connected to the control unit 11. The control unit 11 is configured to determine the pumped Flow (Q) of liquid from the pump 2 based on the static liquid pressure (H-in) at the inner surface 21 of the main body 20 of the flowmeter 5 and the static liquid pressure (H-out) at the outer surface 22 of the main body 20 of the flowmeter 5.

The internal pressure sensor 25 and the external pressure sensor 26 are arranged in holes that preferably are drilled from the outer surface 22 of the main body 20, and suitable sealings are arranged between the sensors and the main body 20.

According to various embodiments the flowmeter 5 comprises several internal pressure sensors 25, preferably two or four.

In the embodiment the flowmeter 5 comprises one internal pressure sensor 25, it is preferably located at the upper half of the inner surface 21 since the flow values at the upper half of the central opening 23 is usually more alike the true/full flow value Q than the flow value at the lower half of the central opening 23. Preferably the single internal pressure sensor 25 is located at the highest point of the inner surface 23, i.e. at 12 o'clock.

In the embodiments the flowmeter 5 comprises two internal pressure sensors 25, they are preferably located one in the upper half of the central opening 23 and one in the lower half of the central opening 23. According to a preferred embodiment they are located in diametral positions, i.e. at 12 and 6 o'clock. In the embodiments the flowmeter 5 comprises four internal pressure sensors 25, they are preferably located in equidistant positions, i.e. at 3, 6, 9 and 12 o'clock. Two internal pressure sensors 25 provides a better accuracy of the flowmeter 5 and four internal pressure sensors 25 provides even better accuracy. However, using several internal pressure sensors increases the cost of the flowmeter 5.

The external pressure sensor 26 is preferably located at the lower half of the outer surface 22 of the main body 20, i.e. at level with the inlet 3 of the pump 2. In the disclosed embodiment the external pressure sensor 26 is located at 4 or 5 o'clock.

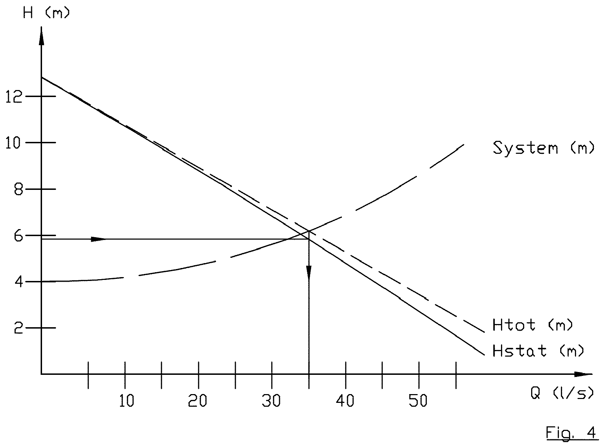

Figure 4 illustrates a schematic example diagram of a pump specific Q-(H-stat)-relationship and Q-Htot-relationship for a specific pump 2 and the Q-H-relationship for the specific pump station 1. The broken/dashed line using short segments is the socalled "pump curve" and this is a fixed and known Q-Htot-relationship between pumped flow Q and Total head Htot for a given frequency (operational speed) of the specific pump 2. If the frequency (operational speed) of the pump 2 is adjusted/altered the "pump curve" line will move towards bottom-left and be steeper if the speed of the pump is decreased and towards top-right and be more horizontal if the speed of the pump is increased. Thus, the disclosed diagram is for a given operational speed for the pump 2. The broken /dashed line using long segments is the socalled "system curve" and this is specific for each pump station 1 and its special conditions (operational environment). The special conditions of the pump station 1 will decide the curvature of the "system curve". The operational duty point of the pump 2 for the specific pump station 1, i.e. the frequency or operational speed used by the pump 2, is illustrated by the intersection between said "pump curve" and said "system curve". The disclosed duty point of the pump 2 provides a pumped Flow (Q) equal to about 35 liters/second and a Total head (Htot) of the pump 2 equal to about 6,2 meters, i.e. the pump 2 will experience a back-pressure equal to about 6,2 meters water column and will be able to pump 35 liters per second at the given frequency (operational speed) of the pump 2. A different pump station 1 having the same type of pump 2 will have the same "pump curve" but a different "system curve" due to a different operational environment, i.e. different outlet conduit configuration and thereby a different back pressure and thereby a different pumped Flow (Q).

The Geodetic head (Hgeo) of the pump station 1 is the vertical distance between the liquid level 14 of the tank 8 and the highest elevation/crest of the outlet piping. Thus, the Geodetic head (Hgeo) will vary over a pumping cycle due to changing liquid level 14 in the tank 8. Thus, when the liquid level 14 is high the Geodetic head is low and during a pumping cycle the liquid level 14 decreases and the Geodetic head increases.

The Total head (Htot) of the pump 2 is equal to a so-called Dynamic head (Hdyn) of the pump 2 plus the Static head (H-stat) of the pump 2. The Dynamic head (Hdyn) of the pump 2 is the dynamic flow loses over the pump 2 and the Static head (H-stat) of the pump 2 is the static pressure in the liquid leaving the pump 2 and that can be used for lifting/transporting the liquid.

The "system curve" may be a theoretical/predetermined "system curve" provided for the specific pump station 1 or a real/measured "system curve" obtained on site. Knowing that the Total head (Htot) of the pump 2 is equal to the "system curve" at different pump operation duty points. Thus, a real "system curve" may be provided by operating the pump 2 at different operational speeds (operational duty points) providing different "pump curves" and a set of many intersections between different "pump curves" and measured pumped flows will make up a true/real "system curve". Thereto, when the pump 2 is active and at the highest operation duty point transporting no liquid, i.e. Q = 0, the Dynamic head (Hdyn) of the pump 2 is zero and the Static head (H-stat) of the pump 2 is equal to the Total head (Htot) of the pump" and thereto there are no losses in the outlet piping and thereby the Static head (H-stat) of the pump 2 is equal to the Geodetic head (Hgeo) of the pump station 1, i.e. the "system curve" at zero flow. In the disclosed embodiment in figure 2 the momentary Geodetic head (Hgeo) of the pump station is equal to about 4 meters, i.e. for a specific liquid level 14 in the tank 8. When the liquid level 14 decreases the "system curve" will move upwards and the intersection between the "system curve" and the Total head (Htot) curve for the specific operation duty point will move upwards and to the left resulting in a higher Static head (H-stat) of the pump 2 and a less flow (Q) of pumped liquid. Thus, during a pumping cycle the pumped flow will change a little, i.e. decrease.

After some time the roughness of the inside of the outlet piping may be smoothened due to fouling and wearing resulting in a less steep "system curve", i.e. the right of the "system curve" will go down a little resulting in that the intersection between the "system curve" and the Total head (Htot) curve for the specific operation duty point will move downwards and to the right resulting in a lower Static head (H-stat) of the pump 2 and a greater flow (Q) of pumped liquid. However, at the same time the outlet piping may become more or less clogged due to fouling resulting in a more steep "system curve", i.e. the right of the "system curve" will go up a little resulting in that the intersection between the "system curve" and the Total head (Htot) curve for the specific operation duty point will move upwards and to the left resulting in a higher Static head (H-stat) of the pump 2 and a less flow (Q) of pumped liquid.

The invention is primarily a new method to determine the pumped flow Q of liquid from a pump 2 using a new flowmeter 5.

The inventive method comprises the following essential steps:
- measuring the static liquid pressure (H-in) at the inner surface 21 of the main body 20 of the flowmeter 5 using the internal pressure sensor 25,
- measuring the static liquid pressure (H-out) at the outer surface 22 of the main body 20 of the flowmeter 5 using the external pressure sensor 26,
- determining the Static head (H-stat) of the pump 2 based on:
   - the measured static liquid pressure (H-in) at the inner surface 21,
   - the measured static liquid pressure (H-out) at the outer surface 22, and
   - a pressure difference (H-diff) corresponding to the difference in height position between the internal pressure sensor 25 and the external pressure sensor 26,
   wherein (H-stat) = (H-in) - (H-out) - (H-diff), and
- determining the pumped Flow (Q) by using the determined Static head (H-stat) of the pump 2 from a predetermined pump 2 specific Q-(H-stat)-relationship.

The formula to determine the Static head (H-stat) is based on the presumption, as described previously, that the internal pressure sensor 25 is located above the external pressure sensor 26, as also disclosed in the figures. In the embodiment disclosed in figure 4, the Static head (H-stat) of the pump is equal to about 5,8 meters and the intersection between H = 5,8 meters and the Static head (Hstat) solid line in figure 4 gives a pumped Flow (Q) equal to 35 litres/second.

Each pump type has a predetermined general Q-(H-stat)-relationship and each pump individual that is sold has an individual Q-(H-stat)-relationship located within an acceptable tolerance range around the general Q-(H-stat)-relationship. The general pump 2 specific Q-(H-stat)-relationship may be used in the inventive method, but in order to obtain an even better accuracy, according to various embodiments of the present invention, the predetermined individual pump 2 specific Q-(H-stat)-relationship is determined by operating the pump 2 for at least three pump calibration runs having different Static head (H-stat) and measuring the corresponding amounts of pumped Flow (Q) in order to obtain a set of pump specific Q-(H-stat)-pairs, and adjusting the predetermined general Q-(H-stat)-relationship using said at least three pump 2 specific Q-(H-stat)-pairs.

According to various embodiments the flow meter 5 comprises X internal pressure sensors 25, i.e. X is a number equal to two or more, in order to obtain an even better accuracy, wherein the method comprises the steps of:
- for each internal pressure sensor 25 measuring the static liquid pressure (H-in) at the inner surface 21 of the main body 20 of the flowmeter 5,
- measuring the static liquid pressure (H-out) at the outer surface 22 of the main body 20 of the flowmeter 5 using the external pressure sensor 26,
- determining the Static head (H-stat) of the pump 2 based on:
   - a sum of the measured static liquid pressures (H-in) at the inner surface 21,
   - the measured static liquid pressure (H-out) at the outer surface 22, and
   - a sum of pressure differences (H-diff) corresponding to the difference in height position between the respective internal pressure sensor 25 and the external pressure sensor 26,
   wherein (H-stat) = [sum(H-in) - X^{∗}(H-out) - sum(H-diff)] / X, and
- determining the pumped Flow (Q) by using the determined Static head (H-stat) of the pump 2 from a predetermined pump 2 specific Q-(H-stat)-relationship.

Thus, when using several internal pressure sensors 25 the Static head (H-stat) of the pump 2 is determined by determining a Static head for each internal pressure sensor 25 and then calculating a mean value.

According to various embodiments, the consumed power (P) for a given pump operation duty point may for instance be determined by a powermeter 27, i.e. based on measured inlet voltage to the pump 2 and the consumed current of the pump 2. The powermeter 27 is preferably part of the control unit 11.

A computer program product comprising at least one non-transitory computer-readable storage medium having computer-readable program code portions embedded therein, wherein the computer-readable program code portions are configured to execute the steps of the method according claim 1 in order to determine the pumped Flow (Q). The computer program product is preferably arranged in the control unit 11.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. Method for determining a pumped flow (Q) from a pump (2) by means of a flowmeter (5) that comprises:
- a main body (20) having a tubular basic shape, the main body (20) in the radial direction having an inner surface (21) and an outer surface (22), wherein said inner surface defines an axially extending central opening (23) of the main body (20) and wherein said central opening (23) is configured to be arranged in fluid communication with an outlet opening (4) of the pump (2),
- an internal pressure sensor (25) configured to measure the static liquid pressure (H-in) at the inner surface (21) of the main body (20), and
- an external pressure sensor (26) configured to measure the static liquid pressure (H-out) at the outer surface (22) of the main body (20),
the method comprising the steps of:
- measuring the static liquid pressure (H-in) at the inner surface (21) of the main body (20) of the flowmeter (5) using the internal pressure sensor (25),
- measuring the static liquid pressure (H-out) at the outer surface (22) of the main body (20) of the flowmeter (5) using the external pressure sensor (26),
- determining the Static head (H-stat) of the pump (2) based on:
- the measured static liquid pressure (H-in) at the inner surface (21),
- the measured static liquid pressure (H-out) at the outer surface (22), and
- a pressure difference (H-diff) corresponding to the difference in height position between the internal pressure sensor (25) and the external pressure sensor (26),
wherein (H-stat) = (H-in) - (H-out) - (H-diff), and
- determining the pumped Flow (Q) by using the determined Static head (H-stat) of the pump (2) from a predetermined pump (2) specific Q-(H-stat)-relationship.

2. The method according to claim 1, wherein the predetermined pump (2) specific Q-(H-stat)-relationship is determined by operating the pump (2) for at least three pump calibration runs having different Static head (H-stat) and measuring the corresponding amounts of pumped Flow (Q) in order to obtain a set of pump (2) specific Q-(H-stat)-pairs, and adjusting a predetermined general Q-(H-stat)-relationship using said at least three pump (2) specific Q-(H-stat)-pairs.

3. The method according to claim 1 or 2, wherein the flow meter (5) comprises X internal pressure sensors (25),
wherein the method comprises the steps of:
- for each internal pressure sensor (25) measuring the static liquid pressure (H-in) at the inner surface (21) of the main body (20) of the flowmeter (5),
- measuring the static liquid pressure (H-out) at the outer surface (22) of the main body (20) of the flowmeter (5) using the external pressure sensor (26),
- determining the Static head (H-stat) of the pump (2) based on:
- a sum of the measured static liquid pressures (H-in) at the inner surface (21),
- the measured static liquid pressure (H-out) at the outer surface (22), and
- a sum of pressure differences (H-diff) corresponding to the difference in height position between the respective internal pressure sensor (25) and the external pressure sensor (26),
wherein (H-stat) = [sum(H-in) - X^{∗}(H-out) - sum(H-diff) ] / X, and
- determining the pumped Flow (Q) by using the determined Static head (H-stat) of the pump (2) from a predetermined pump (2) specific Q-(H-stat)-relationship.

4. Flowmeter (5) for determining a pumped Flow (Q) of liquid from a pump (2), wherein the flowmeter (5) comprises a main body (20) having a tubular basic shape, the main body (20) in the radial direction having an inner surface (21) and an outer surface (22), wherein said inner surface defines an axially extending central opening (23) of the main body (20) and wherein said central opening is configured to be arranged in fluid communication with an outlet opening (4) of the pump (2),
the flowmeter (5) being **characterized by** further comprising:
- an internal pressure sensor (25) configured to measure the static liquid pressure (H-in) at the inner surface (21) of the main body (20), and
- an external pressure sensor (26) configured to measure the static liquid pressure (H-out) at the outer surface (22) of the main body (20),
wherein the internal pressure sensor (25) and the external pressure sensor (26) are configured to be operatively connected to a control unit (11).

5. The flowmeter (5) according to claim 4, wherein the internal pressure sensor (25) is located at the upper half of the inner surface (21), preferably at the highest point of the inner surface (21).

6. The flowmeter (5) according to claim 4 or 5, wherein the external pressure sensor (26) is located at the lower half of the outer surface (22).

7. The flowmeter (5) according to claim 4, wherein the flowmeter (5) comprises at least two internal pressure sensors (25).

8. Pump assembly for determining a pumped flow (Q) of liquid from a pump, **characterized in that** the pump assembly comprises:
- a pump (2),
- a flowmeter (5) according to claim 4 connected to an outlet of the pump (2), and
- a control unit (11) operatively connected to the internal pressure sensor (25) and the external pressure sensor (26) of the flowmeter (5) and configured to determine the pumped Flow (Q) of liquid from the pump (2) based on the static liquid pressure (H-in) at the inner surface (21) of the main body (20) of the flowmeter (5) and the static liquid pressure (H-out) at the outer surface (22) of the main body (20) of the flowmeter (5).

9. The pump assembly according to claim 8, wherein the control unit (11) is integrated into the flowmeter (5).

10. A computer program product comprising at least one non-transitory computer-readable storage medium having computer-readable program code portions embedded therein, wherein the computer-readable program code portions are configured to execute the steps of the method according claim 1 in order to determine the pumped Flow (Q).
